# DEMANDE DE BREVET EUROPEEN

(11) **EP 0 952 034 A1**
(43) Date de publication de la demande: **27.10.1999**
(21) Numéro de dépôt: 99460026.0
(22) Date de dépôt: 22.04.1999
(51) Int. Cl.: B60P 1/18, B62D 53/06

(54) **Remorque dont le plancher est inclinable**

(30) Priorité: 24.04.1998 FR 9805446
(71) Demandeur: Etablissements Rolland SA, 29411 Landerneau Cédex (FR)
(72) Inventeur: Emily, Jean-Yves, 29411 Landerneau Cédex (FR)
(74) Mandataire: Maillet, Alain

(57) **Abrégé**

La présente invention concerne une remorque à plancher inclinable du type qui comprend au moins un essieu (20) dont les moyeux (21) qui supportent les roues peuvent occuper, par rapport au plancher de ladite remorque, soit une position haute, et dans ce cas le plancher est incliné, son arrière se rapprochant du sol, soit une position basse, et dans ce cas le plancher est sensiblement horizontal, ledit essieu (20) étant commandé par au moins un vérin hydraulique (25) relié à un système d'alimentation et refoulement en huile. Elle est caractérisée en ce que dans le circuit hydraulique constitué du vérin hydraulique (25) et du système d'alimentation, est prévue une boule oléopneumatique (27).

## Description

La présente invention concerne une remorque dont le plancher est inclinable. Une telle remorque est par exemple une bétaillère pour le transport des animaux.

Lorsque le plancher se trouve dans une position sensiblement horizontale, une telle remorque est apte au transport. En position inclinée, le plancher a sa partie arrière qui se rapproche du sol et permet ainsi aux animaux, soit de monter, soit de descendre, de ladite remorque.

Le but de la présente invention est de prévoir un essieu commandé de manière que ladite remorque puisse présenter un plancher inclinable.

A cet effet, une remorque selon l'invention est du type qui comprend au moins un essieu dont les moyeux qui supportent les roues peuvent occuper, par rapport au plancher de ladite remorque, soit une position haute, et dans ce cas le plancher est incliné, son arrière se rapprochant du sol, soit une position basse, et dans ce cas le plancher est sensiblement horizontal, ledit essieu étant commandé par au moins un vérin hydraulique relié à un système d'alimentation et refoulement en huile. Elle est caractérisée en ce que dans le circuit hydraulique constitué du vérin hydraulique et du système d'alimentation, est prévue une boule oléopneumatique.

Selon une autre caractéristique de l'invention, elle comprend pour chaque roue d'un essieu, un bras solidaire d'un axe à l'extrémité libre duquel est monté ledit moyeu supportant la roue et une biellette également solidaire dudit axe dont l'extrémité libre est reliée à l'extrémité libre de la tige d'un vérin dont le fût est monté solidaire du châssis de ladite remorque.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1a est une vue latérale en plan d'une remorque selon l'invention, le plancher étant sensiblement horizontal,
la Fig. 1b est une vue latérale en plan d'une remorque selon l'invention, le plancher étant incliné,
les Figs. 2a et 2b sont des vues de détails des essieux respectivement représentés aux Figs. 1a et 1b.

La remorque représentée à la Fig. 1a comprend essentiellement un châssis 1 pourvu, dans sa partie avant, d'un timon 10 et, dans sa partie arrière, d'un essieu 20. La remorque représentée est par exemple une bétaillère.

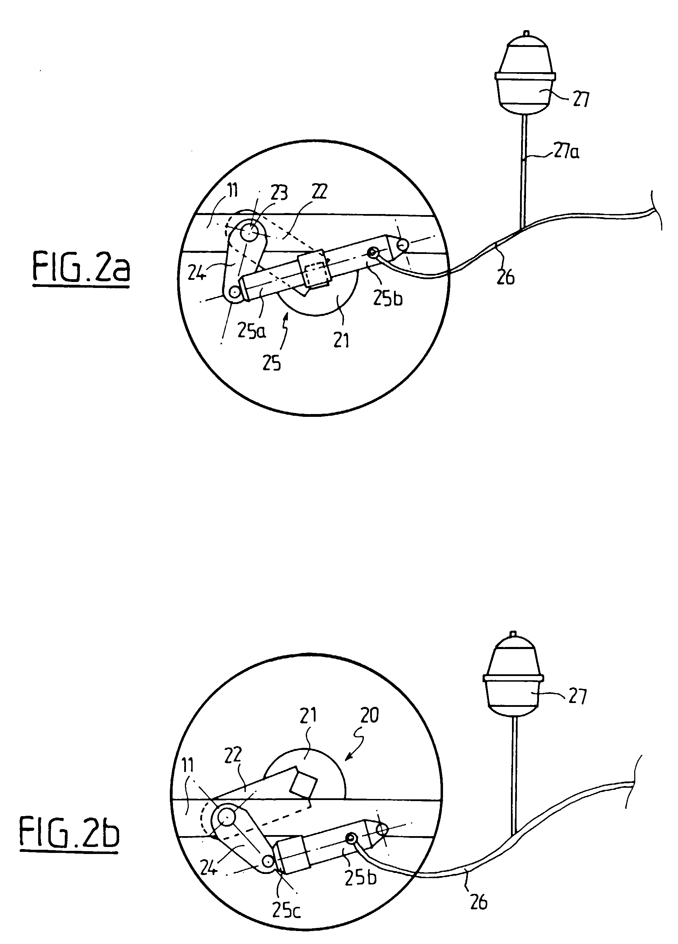

Un côté seulement de l'essieu 20 est représenté en détails à la Fig. 2a. Sur cette Fig., le moyeu 21 sur lequel est montée la roue (représentée par un simple cercle) est lui-même monté à l'extrémité libre d'un bras 22 solidaire d'un axe 23 pour pouvoir pivoter autour de lui. Cet axe 23 est monté à pivotement sur la poutre longitudinale 11 qui constitue le châssis 1.

Sur l'axe 23, est fixée, de manière à pouvoir pivoter avec lui, une première extrémité d'une biellette 24 dont l'extrémité libre est reliée à l'extrémité libre de la tige 25a d'un vérin 25 dont le fût 25b est monté sur la poutre 11. Le vérin hydraulique 25 (non représenté) est relié à un système d'alimentation et refoulement en huile par une canalisation 26.

Selon l'invention, en dérivation avec la canalisation 26, on a prévu une boule oléopneumatique 27 reliée à la canalisation 26 par une conduite 27a.

La boule oléopneumatique 27 est essentiellement constituée d'une membrane partageant la sphère en deux demi-sphères dont l'une reçoit l'huile par la conduite 27a et l'autre est remplie d'une quantité d'azote sous pression. Cette boule oléopneumatique 27 joue le rôle d'un amortisseur hydraulique.

Le fonctionnement de l'essieu selon l'invention est le suivant. A la Fig. 2a, la tige 25a du vérin 25 est sortie, si bien que la biellette 24 occupe une position sensiblement verticale, légèrement dirigée vers l'arrière. De ce fait et par construction, le moyeu 21 se trouve dans une position basse par rapport à la poutre 11.

Lorsque l'essieu 20 se trouve dans la position représentée à la Fig. 2a, la remorque se trouve dans la position représentée à la Fig. 1a. Dans cette position, le châssis 1 est sensiblement horizontal et la remorque est dans une position d'utilisation route.

A la Fig. 2b, on retrouve les mêmes éléments qu'à la Fig. 2a portant ainsi les mêmes références. Cette Fig. 2b diffère de la Fig. 2a en ce que la tige 25a du vérin 25 est entrée dans le fût 25b. Il en est résulté une rotation de la biellette 24 vers l'avant, et également du moyeu 21 vers le haut. Le moyeu 21 se trouve donc en position haute par rapport à la poutre 11.

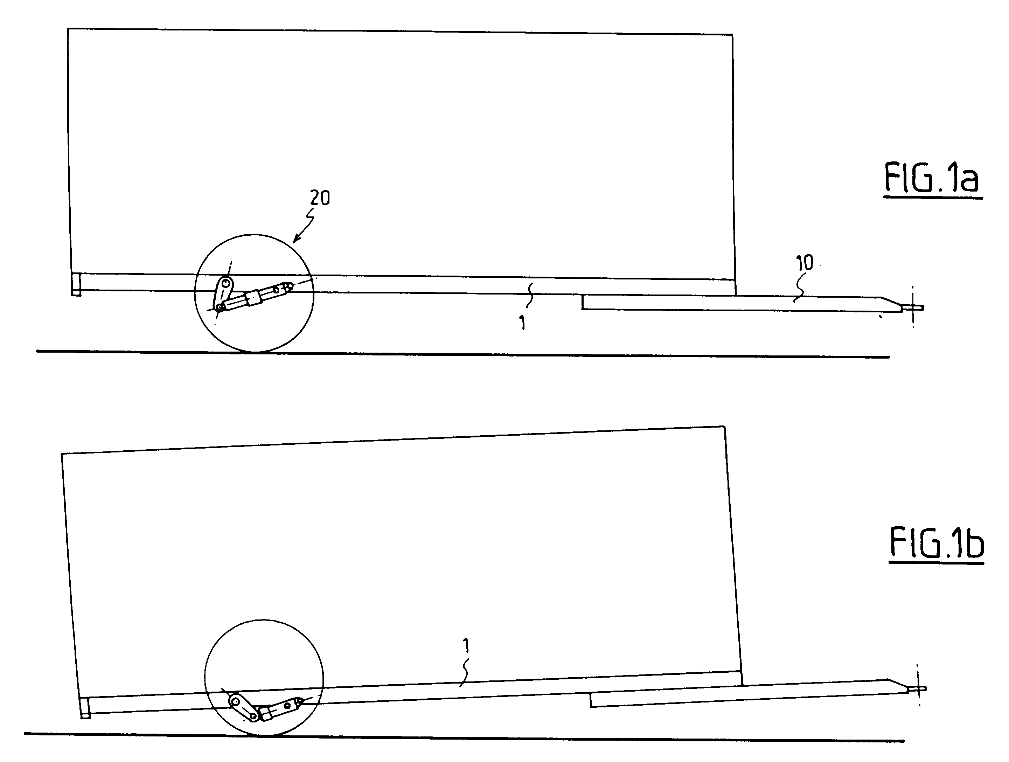

Lorsque l'essieu 20 se trouve dans la position représentée à la Fig. 2b, la remorque se trouve dans la position représentée à la Fig. 1b dans laquelle le châssis 1 est incliné vers l'arrière de manière que sa partie arrière soit relativement proche du sol. Dans le cas d'une bétaillère, les animaux peuvent ainsi monter directement dans la remorque qui se trouve alors dans une position basse.

Pour passer des positions représentées aux Figs. 1b et 2b aux positions représentées aux Figs. la et 2a, on alimente en huile le vérin 25 dont la tige sort alors du fût 25b. Cette commande peut se faire par exemple à partir d'une vanne (non représentée). Dans cette position, l'ensemble du circuit hydraulique est sous pression, et la boule oléopneumatique 27 joue le rôle d'un amortisseur des surpressions résultant des chocs des roues sur le sol.

La remorque ainsi équipée d'une boule oléopneumatique 27 est pourvue d'une fonction amortisseur mise en oeuvre par le vérin 25 et la boule oléopneumatique 27.

Pour faire passer la remorque de sa position haute représentée à la Fig. 1a à la position basse représentée à la Fig. 1b, on actionne une vanne (non représentée) de manière que l'huile sous pression contenue dans le vérin 25 soit refoulée. Il en résulte, par l'effet du poids de la remorque sur l'essieu 20, que la tige 25a rentre dans le fût 25b, et que l'essieu 20 se trouve dans la position montrée à la Fig. 2b.

## Revendications

1. Remorque à plancher inclinable du type qui comprend au moins un essieu (20) dont les moyeux (21) qui supportent les roues peuvent occuper, par rapport au plancher de ladite remorque, soit une position haute, et dans ce cas le plancher est incliné, son arrière se rapprochant du sol, soit une position basse, et dans ce cas le plancher est sensiblement horizontal, ledit essieu (20) étant commandé par au moins un vérin hydraulique (25) relié à un système d'alimentation et refoulement en huile, caractérisée en ce que dans le circuit hydraulique constitué du vérin hydraulique (25) et du système d'alimentation, est prévue une boule oléopneumatique (27).

2. Remorque selon la revendication 1, caractérisée en ce qu'elle comprend pour chaque roue d'un essieu (20), un bras (22) solidaire d'un axe (23) à l'extrémité libre duquel est monté ledit moyeu (21) supportant la roue et une biellette (24) également solidaire dudit axe (23) dont l'extrémité libre est reliée à l'extrémité libre de la tige (25a) dudit vérin (25) dont le fût (25b) est monté solidaire du châssis (1) de ladite remorque.
